# EUROPEAN PATENT APPLICATION

(11) **EP 4 369 796 A1**
(43) Date of publication of application: **15.05.2024**
(21) Application number: 21948789.9
(22) Date of filing: 07.07.2021
(51) Int. Cl.: H04W 52/02

(54) **SIGNAL PROCESSING METHOD AND APPARATUS, ELECTRONIC DEVICE, AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Kudlek, Franz Thomas
(86) International application number: PCT/CN2021/105001
(87) International publication number: WO 2023/279291

(57) **Abstract**

Embodiments of the present disclosure relate to the technical field of mobile communications, and provide a signal processing method and apparatus, an electronic device, and a storage medium. The signal processing method is applied to an access point device, and the method comprises: sending a target radio frame, the target radio frame comprising a restricted target wake time (rTWT) element and a quiet element corresponding to the rTWT element. The embodiments of the present disclosure provide information related to the rTWT information element, so as to meet low-latency transmission requirements.

## Description

### TECHNICAL FIELD

The present disclosure relates to a field of mobile communication technology, and particularly, to a signal processing method and a signal processing apparatus, an electronic device, and a storage medium.

### BACKGROUND

With the rapid development of mobile communication technology, Wireless Fidelity (Wi-Fi) technology has made tremendous progress in transmission speed and throughput. In the current research on the Wi-Fi technology, the focus is on bandwidth transmission of 320MHz, aggregation and collaboration of multiple frequency bands, etc. Main application scenarios of the Wi-Fi technology include video transmission, Augmented Reality (AR), Virtual Reality (VR), etc.

Specifically, the aggregation and collaboration of multiple frequency bands refers to performing communication between devices in 2.4GHz, 5.8GHz, 6GHz, and other frequency bands simultaneously. For the scenario where communication between devices is performed in multiple frequency bands simultaneously, a new Media Access Control (MAC) mechanism needs to be defined for management. In addition, the aggregation and collaboration of multiple frequency bands are expected to support low latency transmission.

In low latency transmission technology, a restricted Target Wake Time (rTWT) mechanism is introduced. The rTWT mechanism allows an Access Point (AP) to use enhanced media access protection and resource reservation mechanisms to provide more predictable latency, so that the AP can reduce the worst-case latency and/or jitter, providing higher reliability services. Therefore, it is necessary to provide relevant information of an rTWT information element to meet the requirement of low latency transmission.

### SUMMARY

Embodiments of the present disclosure provide a signal processing method and a signal processing apparatus, an access point device, a station, an electronic device, and a storage medium, to provide relevant information of an rTWT information element to meet the requirement of low latency transmission.

In an aspect, embodiments of the present disclosure provide a signal processing method. The method is performed by an access point device, including:
sending a target radio frame, in which the target radio frame includes a restricted target wake time (rTWT) element and a quiet element corresponding to the rTWT element.

In another aspect, embodiments of the present disclosure provide a signal processing method. The method is performed by a station, including:
receiving a target radio frame, in which the target radio frame includes a restricted target wake time (rTWT) element and a quiet element corresponding to the rTWT element.

In another aspect, embodiments of the present disclosure provide an access point device, including:
a sending module, configured to send a target radio frame, in which the target radio frame includes a restricted target wake time (rTWT) element and a quiet element corresponding to the rTWT element.

In another aspect, embodiments of the present disclosure provide a station, including:
a receiving module, configured to receive a target radio frame, in which the target radio frame includes a restricted target wake time (rTWT) element and a quiet element corresponding to the rTWT element.

In another aspect, embodiments of the present disclosure provide a signal processing apparatus. The method is applied to an access point device, including:
a radio frame sending module, configured to send a target radio frame, in which the target radio frame includes a restricted target wake time (rTWT) element and a quiet element corresponding to the rTWT element.

In another aspect, embodiments of the present disclosure provide a signal processing apparatus. The method is applied to a station, including:
a radio frame receiving module, configured to receive a target radio frame, in which the target radio frame includes a restricted target wake time (rTWT) element and a quiet element corresponding to the rTWT element.

Embodiments of the present disclosure provide an electronic device, including: a memory, a processor and a computer program stored on the memory and executable on the processor. When executing the program, the processor performs the method in one or more embodiments of the present disclosure.

Embodiments of the present disclosure provide a computer-readable storage medium having stored therein a computer program. When the computer program is executed by a processor, the method in one or more embodiments of the present disclosure is performed.

In the embodiments of the present disclosure, the AP sends a target radio frame to the STA, and the target radio frame includes the rTWT element and Quiet Elements corresponding to the rTWT elements, respectively; By using Quiet Element to protect rTWT elements, so that the AP can reduce the maximum latency and/or reduce the jitter, providing higher reliability services for low latency transmission services.

The additional aspects and advantages of the embodiments of the disclosure will be partially provided in the following description, which will become apparent from the following description or will be understood through the practices of the disclosure.

### BRIEF DESCRIPTION OF THE DRAWINGS

To explain the technical solution in embodiments of the disclosure more clearly, a brief introduction is made below to the accompanying drawings required to be used in the description of the embodiments. It is obvious that the accompanying drawings below are only some embodiments of the disclosure. For those skilled in the art, other accompanying drawings may be obtained based on these accompanying drawings without creative labor.
FIG 1 is a flowchart diagram illustrating a signal processing method according to a first embodiment of the disclosure.
FIG 2 is a flowchart diagram illustrating a signal processing method according to a second embodiment of the disclosure.
FIG 3 is a flowchart diagram illustrating a signal processing method according to a third embodiment of the disclosure.
FIG 4 is a flowchart diagram illustrating a signal processing method according to a fourth embodiment of the disclosure.
FIG 5 is a flowchart diagram illustrating a signal processing method according to a fifth embodiment of the disclosure.
FIG 6 is a block diagram illustrating an access point device according to an embodiment of the disclosure.
FIG 7 is a block diagram illustrating a station according to an embodiment of the disclosure.
FIG 8 is a schematic diagram illustrating an electronic device according to an embodiment of the disclosure.

### DETAILED DESCRIPTION

In embodiments of the disclosure, the term "and/or" describes an association relationship between associated objects, indicating that there may be three types of relationships. For example, A and/or B, may indicate the presence of A alone, the presence of both A and B, and the presence of B alone. The character "/" generally indicates that the associated objects before and after it is an "or" relationship.

In the embodiments of the disclosure, the term "multiple" refers to two or more, similar to other quantifiers.

A clear and complete description of technical solutions in the embodiments of the disclosure may be made with reference to the accompanying drawings below. Obviously, the described embodiments are only a part of rather than all of the embodiments of the disclosure. Based on the embodiments of the disclosure, all other embodiments obtained by those skilled in the art without creative labor fall within the scope of protection of the disclosure.

Embodiments of the disclosure provide a signal processing method and a signal processing apparatus, an electronic device, and storage medium, for providing relevant information of an rTWT information element to meet the requirement of low latency transmission.

The method and device are based on the same application concept. Since the principles of solving problems by the method and device are similar, the implementations of the device and the method can refer to each other, and the repetition will not be elaborated.

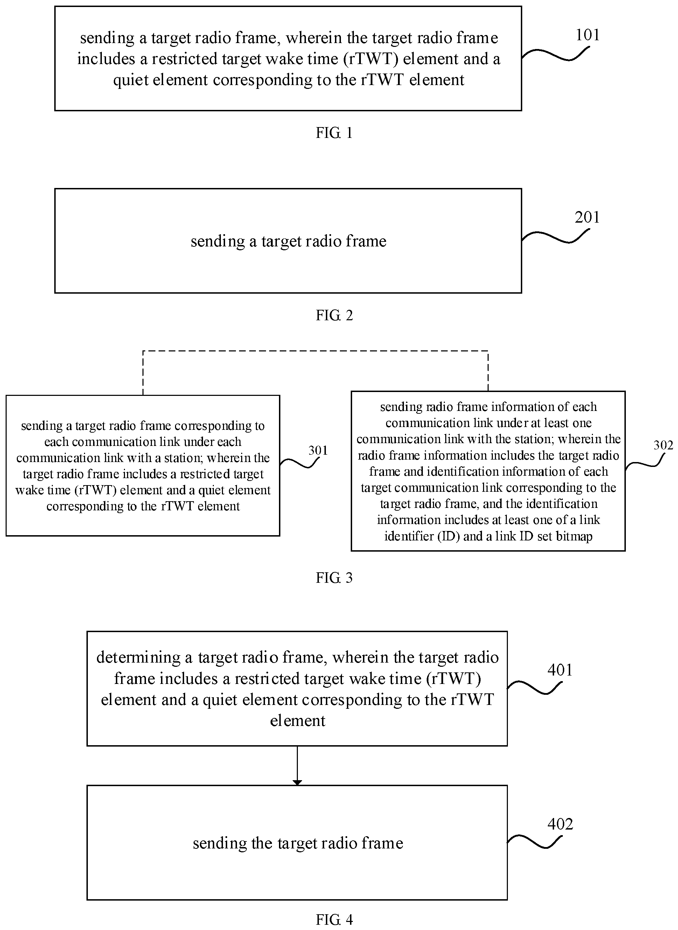

As illustrated in FIG 1, the embodiments of the disclosure provide a signal processing method. Optionally, the method may be performed by an AP. In a wireless local area network, a Basic Service Set (BSS) may be composed of an AP and one or more stations (STAs) that communicate with the AP. The basic service set may be connected to a Distribution System (DS) through its AP, and then connected to another basic service set, forming an Extended Service Set (ESS). The AP and the STAs communicate with each other through communication links.

The method may include the following steps:
Step 101, a target radio frame is sent, the target radio frame includes a restricted target wake time (rTWT) element and a quiet element corresponding to the rTWT element.

In a low latency transmission scenario, a large number of applications have a strict latency requirement for real-time data traffic, such as an average or maximum latency ranging from a few milliseconds to tens of milliseconds, and the applications require real-time data traffic to have minimal jitter and strong reliability. The rTWT mechanism allows the AP to use enhanced media access protection and resource reservation mechanisms to provide more predictable latency, so that the AP can reduce the worst-case latency and/or jitter, to provide more reliable services. Therefore, the rTWT mechanism can be used to transmit low-latency services, such as a service with an average latency of less than 10 milliseconds.

The AP sends the target radio frame to the STA. Optionally, the target radio frame may include a beacon frame, a probe response frame, a multi-link (ML) probe response frame, etc.

When the AP sends the target radio frame to the STA (target STA), in order to prevent interference from other STAs on a low latency transmission service transmitted by a target STA, as well as to prevent a legacy STA and other STAs not participating in an rTWT session from accessing a channel, the quiet element is carried in the target radio frame, so that an overlap time interval is generated between a quiet period (time information/duration information) in the quiet element and duration information or a service period (SP) in the rTWT. In the overlap time interval, the station is not allowed to access to cause interference to the low latency transmission services when there is no low latency service, so as to protect the rTWT through the quiet element. For example, if the beacon frame contains a quiet element and an rTWT, the station is restrained from accessing (when there is no low latency service) during the overlap time interval between the duration information or the service period in the quiet element and the rTWT. In detail, for example, the target radio frame is the beacon, and a format of the quiet element information is shown in Table 1:

**Table 1**

| information content | Element ID | Length | Quiet Count | Quiet Period | Quiet Duration | Quiet Fffset |
|---|---|---|---|---|---|---|
| octets | 1 | 1 | 2 | 1 | 2 | 2 |

The Quiet Count field represents a number of target beacon transmission time periods (TBTT), i.e., a beacon interval until the start of a next quiet period.

The Quiet Period field represents a quiet cycle, and a duration of each quiet period is the number of beacon intervals. For example, if the Quiet Period field is set to 0, it means that there is no defined periodic quiet interval. If the Quiet Period field is set to 1, it indicates there is a periodic quiet interval.

The Quiet Duration field represents a duration of the quiet period, represented by TU.

The Quiet Offset field represents an offset of the quiet period starting from the TBTT specified in the Quiet Count field, represented by TU. A value of the Quiet Offset field is less than one beacon interval. The Quiet offset is a time offset. The Quiet time usually starts immediately after a Beacon, and a stop time point is the Quiet Duration. However, the Quiet time may be delayed backwards, and a delayed time period is called the Quiet Offset.

The target radio frame includes quiet elements and an rTWT element corresponding to each quiet element, respectively. That is to say, at least one or more rTWT elements have corresponding quiet elements. An overlap quiet interval can be scheduled by including one or more quiet elements in the beacon and probe response. The AP [e.g. enhancements for extremely high throughput (EHT) AP] sends the beacon and the probe response, achieving protection of the rTWT through the quiet elements, preventing a legacy STA and other STAs not participating in the rTWT session from accessing the channel, and from interfering with the low latency transmission service transmitted by the target STA.

It should be noted that the target radio frame includes the rTWT element and the quiet element corresponding to the rTWT element. There may be only one rTWT element having a corresponding quiet element, or at least two rTWT elements having corresponding quiet elements, which is not limited in embodiments of the disclosure.

It can be understood that in the embodiments of the disclosure, the AP and the (target) STA may support a single-link device or a multi-link device. In a multi-link scenario, the AP and the STA may be represented as AP MLD and non-AP MLD, respectively. For ease of description, in the following context, an example of communication between one AP and one STA is described in the multi-link scenario. However, the embodiments of the disclosure are not limited to this.

In the embodiments of the disclosure, the AP sends the target radio frame to the STA, and the target radio frame includes the rTWT elements and the quiet elements corresponding to the rTWT elements, respectively. By protecting the rTWT element using the quiet element, the AP can reduce the maximum latency and/or the jitter, providing a higher reliability service for the low latency transmission service. The embodiments of the disclosure provide a configuration method and a transmission method for the rTWT information element.

As illustrated in FIG 2, embodiments of the disclosure further provide a signal processing method. Optionally, the method is performed by an AP, and may include the following steps:
Step 201, the target radio frame is sent, the quiet elements and the rTWT elements are arranged according to the following scenario one and/or scenario two in the target radio frame.

Scenario 1, a first ranking order of a first quiet element in the quiet elements is the same as a second ranking order of a first rTWT element in the rTWT elements, the first rTWT element is an rTWT element corresponding to the first quiet element.

In the scenario one, the quiet elements and rTWT elements appear in pairs in a one-to-one correspondence. For the target radio frame, all quiet elements in the target radio frame are ranked separately to obtain a quiet element ranking Ra, where a represents a ranking value. All rTWT elements in the target radio frame are ranked separately to obtain an rTWT element ranking Rb, where b represents a ranking value. For the paired quiet element and rTWT element, a ranking order of the quiet element in the quiet elements is the first ranking order Ra, and a ranking order of the rTWT element in the rTWT elements is the second ranking order Ra, then a=b.

Scenario 2, the quiet element includes a time offset value, a time offset subfield is carried in a second rTWT element, and the time offset subfield includes a time offset value of a target quiet element corresponding to the rTWT element.

The quiet element includes the time offset value, and the time offset value is unique, as shown in the Quiet Offset field in the Table 1 above. The second rTWT element carries the time offset subfield. The time offset subfield includes time offset values of target quiet elements corresponding to one or at least two rTWT elements in the target radio frame. If the time offset subfield includes the time offset value of the target quiet element corresponding to each rTWT element, the number of time offset values in the time offset subfield is consistent with the number of target quiet elements.

For example, the target radio frame includes N rTWT elements, and one of the N rTWT elements is used as the second rTWT element. The time offset values of the target quiet elements corresponding to the N rTWT elements are indicated in a time offset subfield of the second rTWT element. In this way, the target quiet elements corresponding to each rTWT element may be determined based on the time offset values of the target quiet elements corresponding to the N rTWT elements respectively.

In an optional embodiment, the rTWT element includes at least one of first indication information and second indication information.

The first indication information indicates that a service corresponding to the target radio frame includes a low latency service. The first indication information is an identification of the low latency transmission service, indicating that the rTWT element is used for the transmission of the low latency service. For example, the AP broadcasts the identification of the low latency transmission service.

The second indication information indicates that the service corresponding to the target radio frame includes an uplink service or a downlink service. A service period (SP) of the low latency service is divided into uplink and downlink, and a single bit can be used to indicate the second indication information. For example, "0" identifies the uplink service and "1" identifies the downlink service.

In an optional embodiment, the access point device includes a single-link device or a multi-link device.

The access point device may support multi-link communication or single-link communication. Taking the multi-link communication as an example, in a wireless communication system, the AP and the STA may be multi-link devices (MLDs). The MLD supports a function of sending and/or receiving simultaneously under multiple links at the same time. Therefore, there may be multiple links for communication between the AP and the STA.

As illustrated in FIG 3, the embodiments of the disclosure further provide a signal processing method. Optionally, the method is performed by an AP. The AP includes a multi-link device (AP MLD). The method may include step 301 and/or step 302.

Step 301, a target radio frame corresponding to each communication link is sent under each communication link with a station, the target radio frame includes an rTWT element and a quiet element corresponding to the rTWT element.

The AP MLD broadcasts the target radio frame under each communication link mapped by the low latency service separately.

Optionally, the communication link mentioned in step 301 is a communication link for transmitting the low latency transmission service. The AP is possible to not send the target radio frame in some communication links with the station that do not transmit the low latency transmission service.

Step 302, the radio frame information of each communication link is sent under at least one of the communication links with the station.

The radio frame information includes the target radio frame and identification information of each target communication link corresponding to the target radio frame. The identification information includes at least one of a link identifier (ID) and a link ID set bitmap.

The target radio frame includes the rTWT element and the quiet element corresponding to the rTWT element.

Optionally, the communication link mentioned in step 302 is a communication link for transmitting a low latency transmission service. For some communication links that do not transmit the low latency transmission service, the AP does not broadcast its radio frame information.

Under at least one communication link between the AP MLD and the STA, the AP MLD may broadcast radio frame information under other communication links. The radio frame information includes the target radio frame and identification information of each target communication link corresponding to the target radio frame. The identification information includes at least one of the link ID and the link ID set bitmap. For example, in a case where the identification information includes the link ID set bitmap, a number of the rTWT elements appearing is the same as a number of linkIDsetbitmaps set to "1" in the link ID set bitmap, where the linkIDsetbitmap may be two bytes.

As illustrated in FIG 4, the embodiments of the disclosure further provide a signal processing method. Optionally, the method is performed by an AP, and the method includes:

Step 401, a target radio frame is determined. The target radio frame includes an rTWT element and a quiet element corresponding to the rTWT element.

In a low latency transmission scenario, a large number of applications have a strict latency requirement for real-time data traffic, such as an average or maximum latency ranging from a few milliseconds to tens of milliseconds, and the applications require real-time data traffic to have minimal jitter and strong reliability; The rTWT mechanism allows the AP to use enhanced media access protection and resource reservation mechanisms to provide more predictable latency, so that the AP can reduce the worst-case latency and/or jitter, to provide more reliable services. Therefore, the rTWT mechanism can be used to transmit low latency services, such as a service with an average latency of less than 10 milliseconds.

The AP determines (or generates) the target radio frame. Optionally, the target radio frame, for example, may include a beacon frame, a probe response frame, an ML probe response frame, etc. The target radio frame includes the rTWT element and the quiet element corresponding to the rTWT element. In order to prevent interference from other STAs on a low latency transmission service transmitted by a target STA, as well as to prevent a legacy STA and other STAs not participating in an rTWT session from accessing a channel, the quiet element is carried in the target radio frame, so that a quiet period (time information/duration information) in the quiet element overlaps with duration information or a service period (SP) in the rTWT, and the rTWT is protected through the quiet element.

Step 402, the target radio frame is sent.

The AP sends the target radio frame to the STA, and protects the rTWT element through the quiet element, so that the AP can reduce a maximum latency and/or jitter, providing a higher reliability service for the low latency transmission service.

In an optional embodiment, the target radio frame includes at least one of a beacon frame, a probe response frame, a ML probe response frame, an association response frame, and a reassociation response frame. It can be understood that, in addition to this, the target radio frame may also include other forms, which is not limited in the embodiments of the disclosure.

In the embodiments of the disclosure, the AP sends the target radio frame to the STA, and the target radio frame includes the rTWT elements and the quiet elements corresponding to the rTWT elements, respectively. By using the quiet element to protect the rTWT element, the AP can reduce the maximum latency and/or reduce the jitter, providing the higher reliability service for the low latency transmission service.

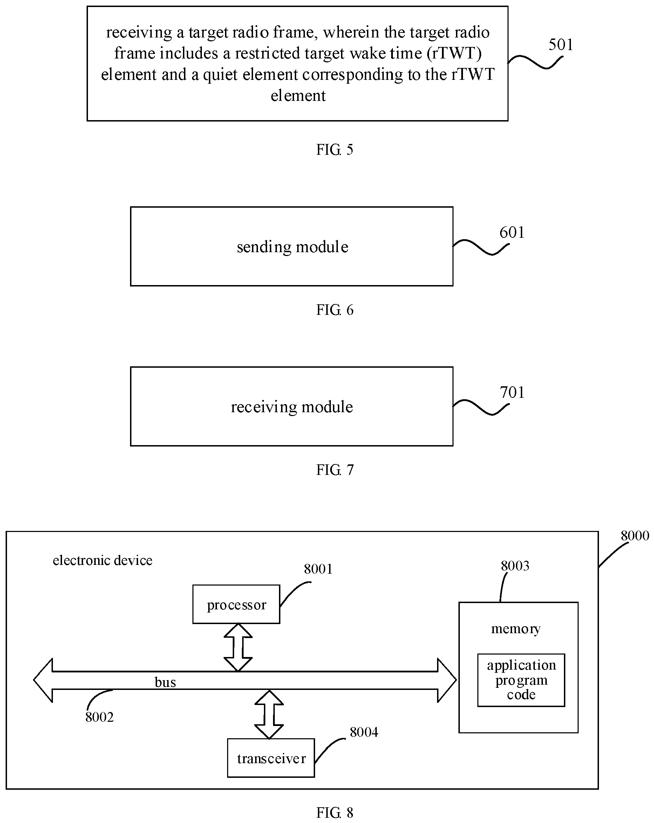

Referring to FIG 5, the embodiments of the disclosure further provides a signal processing method, performed by a STA (or a target STA). The STA may be a device that provides voice and/or data connectivity to a user, a handheld device with a wireless link function, or other processing devices connected to a wireless modem. In a wireless local area network, a BSS may be composed of an AP and one or more STAs communicating with the AP. The AP and the STA communicate with each other through a communication link.

The method includes:
Step 501, a target radio frame is received, the target radio frame includes an rTWT element and a quiet element corresponding to the rTWT element.

In a low latency transmission scenario, a large number of applications have a strict latency requirement for real-time data traffic, such as an average or maximum latency ranging from a few milliseconds to tens of milliseconds, and the applications require real-time data traffic to have minimal jitter and strong reliability. The rTWT mechanism allows the AP to use enhanced media access protection and resource reservation mechanisms to provide more predictable latency, so that the AP can reduce the worst-case latency and/or jitter, to provide more reliable services. Therefore, the rTWT mechanism can be used to transmit low-latency services, such as a service with an average latency of less than 10 milliseconds.

The STA receives the target radio frame sent by the AP. Optionally, the target radio frame may include a beacon frame, a probe response frame, a multi-link (ML) probe response frame, etc.

When the AP sends the target radio frame to the STA (target STA), in order to prevent interference from other STAs on a low latency transmission service transmitted by the target STA, as well as to prevent a legacy STA and other STAs not participating in an rTWT session from accessing a channel, the quiet element is carried in the target radio frame, so that an overlap time interval is generated between a quiet period (time information/duration information) in the quiet element and duration information or a service period (SP) in the rTWT. In the overlap time interval, the station is not allowed to access to cause interference to the low latency transmission services when there is no low latency service, so as to protect the rTWT through the quiet element. For example, if the beacon frame contains a quiet element and an rTWT, the station is restrained from accessing (when there is no low latency service) during the overlap time interval between the duration information or the service period in the quiet element and the rTWT. In detail, for example, the target radio frame is the beacon, and a format of the quiet element information is shown in Table 2:

**Table 2**

| information content | Element ID | Length | Quiet Count | Quiet Period | Quiet Duration | Quiet Fffset |
|---|---|---|---|---|---|---|
| octets | 1 | 1 | 2 | 1 | 2 | 2 |

The Quiet Count field represents the number of target beacon transmission time periods (TBTT), i.e., a beacon interval until the start of a next quiet period.

The Quiet Period field represents a quiet cycle, and a duration of each quiet period is the number of beacon intervals. For example, if the Quiet Period field is set to 0, it means that there is no defined periodic quiet interval. If the Quiet Period field is set to 1, it indicates there is a periodic quiet interval.

The Quiet Duration field represents a duration of the quiet period.

The Quiet Offset field represents an offset of the quiet period starting from the TBTT specified in the Quiet Count field, represented by TU. A value of the Quiet Offset field is less than one beacon interval. The Quiet offset is a time offset. The Quiet time usually starts immediately after a Beacon, and a stop time point is the Quiet Duration. However, the Quiet time may be delayed backwards, and the delayed time period is called the Quiet offset.

The target radio frame includes quiet elements and an rTWT element corresponding to each quiet element, respectively; That is to say, at least one or more rTWT elements have corresponding quiet elements. An overlap quiet interval can be scheduled by including one or more quiet elements in the beacon and probe response. The AP [e.g. enhancements for extremely high throughput (EHT) AP] sends the beacon and the probe response, achieving protection of the rTWT through the quiet elements, preventing a legacy STA and other STAs not participating in the rTWT session from accessing the channel, and from interfering with the low latency transmission service transmitted by the target STA.

It can be understood that in the embodiments of the disclosure, the AP and the (target) STA may support a single-link device or a multi-link device. In a multi-link scenario, the AP and the STA may be represented as AP MLD and non-AP MLD, respectively. For ease of description, in the following context, an example of communication between one AP and one STA is described in the multi-link scenario. However, the embodiments of the disclosure are not limited to this.

In the embodiments of the disclosure, the STA receives the target radio frame sent by the AP, and the target radio frame includes the rTWT elements and the quiet elements corresponding to the rTWT elements, respectively. By protecting the rTWT element using the quiet element, the AP can reduce the maximum latency and/or the jitter, providing a higher reliability service for the low latency transmission service. The embodiments of the disclosure provide a configuration method and a transmission method for the rTWT information element.

As an optional embodiment, in the target radio frame, the quiet elements and the rTWT elements are arranged according to the following scenario one and/or scenario two.

Scenario 1: a first ranking order of a first quiet element in the quiet elements is the same as a second ranking order of a first rTWT element in the rTWT elements, the first rTWT element is an rTWT element corresponding to the first quiet element.

The quiet elements and rTWT elements appear in pairs in a one-to-one correspondence. For the target radio frame, all quiet elements in the target radio frame are ranked separately to obtain a quiet element ranking Ra, where a represents a ranking value. All rTWT elements in the target radio frame are ranked separately to obtain an rTWT element ranking Rb, where b represents a ranking value. For the paired quiet element and rTWT element, a ranking order of the quiet element in the quiet elements is the first ranking order Ra, and a ranking order of the rTWT element in the rTWT elements is the second ranking order Ra, then a=b.

Scenario 2, the quiet element includes a time offset value, a time offset subfield is carried in a second rTWT element, and the time offset subfield includes a time offset value of a target quiet element corresponding to the rTWT element.

The quiet element includes the time offset value, and the time offset value is unique, as shown in the Quiet Offset field in the Table 1 above. The second rTWT element carries the time offset subfield. The time offset subfield includes a time offset value of the target quiet elemens corresponding to each rTWT element in the target radio frame. The number of time offset values in the time offset subfield is consistent with the number of target quiet elements.

For example, the target radio frame includes N rTWT elements, and one of the N rTWT elements is used as the second rTWT element. The time offset values of the target quiet elements corresponding to the N rTWT elements are indicated in a time offset subfield of the second rTWT element. In this way, the target quiet elements corresponding to each rTWT element may be determined based on the time offset values of the target quiet elements corresponding to the N rTWT elements respectively.

As an optional embodiment, the rTWT element includes at least one of first indication information and second indication information;

The rTWT element includes at least one of the first indication information and the second indication information.

The first indication information indicates that a service corresponding to the target radio frame includes a low latency service. The first indication information is an identification of the low latency transmission service, indicating that the rTWT element is used for the transmission of the low latency service. For example, the AP broadcasts the identification of the low latency transmission service.

The second indication information indicates that the service corresponding to the target radio frame includes an uplink service or a downlink service. A service period (SP) of the low latency service is divided into uplink and downlink, and a single bit can be used to indicate the second indication information. For example, "0" identifies the uplink service and "1" identifies the downlink service.

As an optional embodiment, the station includes a single-link device or a multi-link device.

The station may support multi-link communication or single-link communication; Taking the multi-link communication as an example, in a wireless communication system, the AP and the STA may be MLD. The MLD supports a function of sending and/or receiving simultaneously under multiple links at the same time. Therefore, there may be multiple links for communication between the AP and the STA.

As an optional embodiment, in a case where the station includes the multi-link device, receiving the target radio frame includes the following scenario three and/or scenario four.

Scenario 3: a target radio frame corresponding to each communication link is received under each communication link with an access point.

An AP MLD broadcasts the target radio frame under each communication link mapped by the low latency service separately. An STA MLD (or non-AP MLD) receives the target radio frame corresponding to each communication link under each communication link with the access point.

Scenario 4: the radio frame information of each communication link is received under at least one of the communication links with the access point.

The radio frame information includes the target radio frame and identification information of each target communication link corresponding to the target radio frame. The identification information includes at least one of a link identifier (ID) and a link ID set bitmap.

The radio frame information includes the target radio frame and identification information of each target communication link corresponding to the target radio frame. The identification information includes at least one of a link identifier (ID) and a link ID set bitmap.

The target radio frame includes the rTWT element and the quiet element corresponding to the rTWT element.

Under at least one communication link between the AP MLD and the STA, the AP MLD can broadcast radio frame information under other communication links. The STA MLD receives the radio frame information of each communication link under at least one communication link. The radio frame information includes the target radio frame and identification information of each target communication link corresponding to the target radio frame. The identification information includes at least one of the link ID and the link ID set bitmap. For example, in a case where the identification information includes the link ID set bitmap, a number of the rTWT elements appearing is the same as the number of linkIDsetbitmaps set to "1" in the link ID set bitmap.

In an optional embodiment, the target radio frame includes at least one of a beacon frame, a probe response frame, a ML probe response frame, an association response frame, and a reassociation response frame. It can be understood that, in addition to this, the target radio frame may also include other forms, which is not limited in the embodiments of the disclosure.

In the embodiments of the disclosure, the STA receives the target radio frame sent by the AP, and the target radio frame includes the rTWT elements and the quiet elements corresponding to the rTWT elements, respectively. By using the quiet element to protect the rTWT element, the AP can reduce the maximum latency and/or reduce the jitter, providing the higher reliability service for the low latency transmission service.

Based on the same principles as the methods provided in the embodiments of the disclosure, the embodiments of the disclosure further provide an access point device. In a wireless local area network, a BSS may be composed of an AP and one or more STAs communicating with the AP. The basic service set may be connected to a DS through its AP and then connected to another basic service set, forming an Extended Service Set (ESS). The AP and the STA communicate with each other through a communication link. As illustrated in FIG 6, the access point device includes:

a sending module 601, configured to send a target radio frame, the target radio frame includes an rTWT element and a quiet element corresponding to the rTWT element.

In a low latency transmission scenario, a large number of applications have a strict latency requirement for real-time data traffic, such as an average or maximum latency ranging from a few milliseconds to tens of milliseconds, and the applications require real-time data traffic to have minimal jitter and strong reliability. The rTWT mechanism allows the AP to use enhanced media access protection and resource reservation mechanisms to provide more predictable latency, so that the AP can reduce the worst-case latency and/or jitter, to provide more reliable services. Therefore, the rTWT mechanism can be used to transmit low-latency services, such as a service with an average latency of less than 10 milliseconds.

The AP sends the target radio frame to the STA. Optionally, the target radio frame may include a beacon frame, a probe response frame, a multi-link (ML) probe response frame, etc.

When the AP sends the target radio frame to the STA (target STA), in order to prevent interference from other STAs on a low latency transmission service transmitted by a target STA, as well as to prevent a legacy STA and other STAs not participating in an rTWT session from accessing a channel, the quiet element is carried in the target radio frame, so that an overlap time interval is generated between a quiet period (time information/duration information) in the quiet element and duration information or a service period (SP) in the rTWT. In the overlap time interval, the station is not allowed to access to cause interference to the low latency transmission services when there is no low latency service, so as to protect the rTWT through the quiet element. For example, if the beacon frame contains a quiet element and an rTWT, the station is restrained from accessing (when there is no low latency service) during the overlap time interval between the duration information or the service period in the quiet element and the rTWT. In detail, for example, the target radio frame is the beacon, and a format of the quiet element information is shown in Table 1:

**Table 1**

| information content | Element ID | Length | Quiet Count | Quiet Period | Quiet Duration | Quiet Fffset |
|---|---|---|---|---|---|---|
| octets | 1 | 1 | 2 | 1 | 2 | 2 |

The Quiet Count field represents a number of target beacon transmission time periods (TBTT), i.e., a beacon interval until the start of a next quiet period.

The Quiet Period field represents a quiet cycle, and a duration of each quiet period is the number of beacon intervals. For example, if the Quiet Period field is set to 0, it means that there is no defined periodic quiet interval. If the Quiet Period field is set to 1, it indicates there is a periodic quiet interval.

The Quiet Duration field represents a duration of the quiet period.

The Quiet Offset field represents an offset of the quiet period starting from the TBTT specified in the Quiet Count field, represented by TU. A value of the Quiet Offset field is less than one beacon interval. The Quiet offset is a time offset. The Quiet time usually starts immediately after a Beacon, and a stop time point is the Quiet Duration. However, the Quiet time may be delayed backwards, and a delayed time period is called the Quiet Offset.

The target radio frame includes quiet elements and an rTWT element corresponding to each quiet element, respectively. That is to say, at least one or more rTWT elements have corresponding quiet elements. An overlap quiet interval can be scheduled by including one or more quiet elements in the beacon and probe response. The AP [e.g. enhancements for extremely high throughput (EHT) AP] sends the beacon and the probe response, achieving protection of the rTWT through the quiet elements, preventing a legacy STA and other STAs not participating in the rTWT session from accessing the channel, and from interfering with the low latency transmission service transmitted by the target STA.

It can be understood that in the embodiments of the disclosure, the AP and the (target) STA may support a single-link device or a multi-link device. In a multi-link scenario, the AP and the STA may be represented as AP MLD and non-AP MLD, respectively. For ease of description, in the following context, an example of communication between one AP and one STA is described in the multi-link scenario. However, the embodiments of the disclosure are not limited to this.

In an optional embodiment, in the target radio frame, a first ranking order of a first quiet element in the quiet elements is the same as a second ranking order of a first rTWT element in the rTWT elements, the first rTWT element is an rTWT element corresponding to the first quiet element;
and/or,
the quiet element includes a time offset value, a time offset subfield is carried in a second rTWT element, and the time offset subfield includes a time offset value of a target quiet element corresponding to the rTWT element.

In an optional embodiment, the rTWT element includes at least one of first indication information and second indication information.

The first indication information indicates that a service corresponding to the target radio frame includes a low latency service.

The second indication information indicates that the service corresponding to the target radio frame includes an uplink service or a downlink service.

In an optional embodiment, the access point device includes a single-link device or a multi-link device.

In an optional embodiment, in a case where the access point device includes the multi-link device, the sending module 601 includes:
a first sending submodule, configured to send a target radio frame corresponding to each communication link under each communication link with a station;
   and/or,
a second sending submodule, configured to send the radio frame information of each communication link under at least one of the communication links with the station.

The radio frame information includes the target radio frame and identification information of each target communication link corresponding to the target radio frame. The identification information includes at least one of a link identifier (ID) and a link ID set bitmap.

In an optional embodiment, the access point device includes:
a determining module, configured to determine the target radio frame.

In an optional embodiment, the target radio frame includes at least one of a beacon frame, a probe response frame, a ML probe response frame, an association response frame, and a reassociation response frame.

In the embodiments of the disclosure, the transmission module 601 sends the target radio frame to the STA, and the target radio frame includes the rTWT elements and the quiet elements corresponding to the rTWT elements, respectively. By using the quiet element to protect the rTWT element, the AP can reduce the maximum latency and/or reduce the jitter, providing the higher reliability service for the low latency transmission service.

The embodiments of the disclosure further provide a signal processing apparatus, applied to an access point device. The signal processing apparatus includes:
a radio frame sending module, configured to send a target radio frame, the target radio frame includes an rTWT element and a quiet element corresponding to the rTWT element.

The apparatus further includes other modules of the access point device in the aforementioned embodiments, which will not be repeated here.

Referring to FIG 7, embodiments of the disclosure further provide a station STA (or target STA). The STA may be a device that provides voice and/or data connectivity to a user, a handheld device with a wireless link function, or other processing devices connected to a wireless modem. In a wireless local area network, a BSS may be composed of an AP and one or more STAs communicating with the AP. The AP and the STA communicate with each other through a communication link.

The station includes:
a receiving module 701, configured to receive a target radio frame, the target radio frame includes an rTWT element and a quiet element corresponding to the rTWT element.

In a low latency transmission scenario, a large number of applications have a strict latency requirement for real-time data traffic, such as an average or maximum latency ranging from a few milliseconds to tens of milliseconds, and the applications require real-time data traffic to have minimal jitter and strong reliability. The rTWT mechanism allows the AP to use enhanced media access protection and resource reservation mechanisms to provide more predictable latency, so that the AP can reduce the worst-case latency and/or jitter, to provide more reliable services. Therefore, the rTWT mechanism can be used to transmit low-latency services, such as a service with an average latency of less than 10 milliseconds.

The STA receives the target radio frame sent by the AP. Optionally, the target radio frame may include a beacon frame, a probe response frame, a multi-link (ML) probe response frame, etc.

When the AP sends the target radio frame to the STA (target STA), in order to prevent interference from other STAs on a low latency transmission service transmitted by the target STA, as well as to prevent a legacy STA and other STAs not participating in an rTWT session from accessing a channel, the quiet element is carried in the target radio frame, so that an overlap time interval is generated between a quiet period (time information/duration information) in the quiet element and duration information or a service period (SP) in the rTWT. In the overlap time interval, the station is not allowed to access to cause interference to the low latency transmission services when there is no low latency service, so as to protect the rTWT through the quiet element. For example, if the beacon frame contains a quiet element and an rTWT, the station is restrained from accessing (when there is no low latency service) during the overlap time interval between the duration information or the service period in the quiet element and the rTWT. In detail, for example, the target radio frame is the beacon, and a format of the quiet element information is shown in Table 2:

**Table 2**

| information content | Element ID | Length | Quiet Count | Quiet Period | Quiet Duration | Quiet Fffset |
|---|---|---|---|---|---|---|
| octets | 1 | 1 | 2 | 1 | 2 | 2 |

The Quiet Count field represents the number of target beacon transmission time periods (TBTT), i.e., a beacon interval until the start of a next quiet period.

The Quiet Period field represents a quiet cycle, and a duration of each quiet period is the number of beacon intervals. For example, if the Quiet Period field is set to 0, it means that there is no defined periodic quiet interval. If the Quiet Period field is set to 1, it indicates there is a periodic quiet interval.

The Quiet Duration field represents a duration of the quiet period.

The Quiet Offset field represents an offset of the quiet period starting from the TBTT specified in the Quiet Count field, represented by TU. A value of the Quiet Offset field is less than one beacon interval. The Quiet offset is a time offset. The Quiet time usually starts immediately after a Beacon, and a stop time point is the Quiet Duration. However, the Quiet time may be delayed backwards, and the delayed time period is called the Quiet offset.

The target radio frame includes quiet elements and an rTWT element corresponding to each quiet element, respectively; That is to say, at least one or more rTWT elements have corresponding quiet elements. An overlap quiet interval can be scheduled by including one or more quiet elements in the beacon and probe response. The AP [e.g. enhancements for extremely high throughput (EHT) AP] sends the beacon and the probe response, achieving protection of the rTWT through the quiet elements, preventing a legacy STA and other STAs not participating in the rTWT session from accessing the channel, and from interfering with the low latency transmission service transmitted by the target STA.

It can be understood that in the embodiments of the disclosure, the AP and the (target) STA may support a single-link device or a multi-link device. In a multi-link scenario, the AP and the STA may be represented as AP MLD and non-AP MLD, respectively. For ease of description, in the following context, an example of communication between one AP and one STA is described in the multi-link scenario. However, the embodiments of the disclosure are not limited to this.

In an optional embodiment, in the target radio frame, a first ranking order of a first quiet element in the quiet elements is the same as a second ranking order of a first rTWT element in the rTWT elements, the first rTWT element is an rTWT element corresponding to the first quiet element;
and/or,
the quiet element includes a time offset value, a time offset subfield is carried in a second rTWT element, and the time offset subfield includes a time offset value of a target quiet element corresponding to the rTWT element.

In an optional embodiment, the rTWT element includes at least one of first indication information and second indication information;

The first indication information indicates that a service corresponding to the target radio frame includes a low latency service.

The second indication information indicates that the service corresponding to the target radio frame includes an uplink service or a downlink service.

In an optional embodiment, the station includes a single-link device or a multi-link device.

In an optional embodiment, in a case where the station includes the multi-link device, the receiving module 701 includes:
a first receiving submodule, configured to receive a target radio frame corresponding to each communication link under each communication link with an access point;
   and/or,
a second receiving submodule, configured to receive the radio frame information of each communication link under at least one of the communication links with the access point.

The radio frame information includes the target radio frame and identification information of each target communication link corresponding to the target radio frame. The identification information includes at least one of a link identifier (ID) and a link ID set bitmap.

In an optional embodiment, the target radio frame includes at least one of a beacon frame, a probe response frame, a ML probe response frame, an association response frame, and a reassociation response frame.

In the embodiments of the disclosure, the receiving module 701 receives the target radio frame sent by the AP, and the target radio frame includes the rTWT elements and the quiet elements corresponding to the rTWT elements, respectively. By using the quiet element to protect the rTWT element, the AP can reduce the maximum latency and/or reduce the jitter, providing the higher reliability service for the low latency transmission service. Embodiments of the disclosure provide a configuration method and a transmission method for the rTWT information element.

Embodiments of the disclosure further provide a signal processing apparatus, applied to a station. The signal processing apparatus includes:
a radio frame receiving module, configured to receive a target radio frame, the target radio frame includes an rTWT element and a quiet element corresponding to the rTWT element.

The apparatus further includes other modules of the station in the aforementioned embodiments, which will not be further described here.

Embodiments of the disclosure further provide an electronic device, as shown in FIG 8. The electronic device 8000 shown in FIG 8 may be a server, including a processor 8001 and a memory 8003. The processor 8001 is connected to the memory 8003, such as through a bus 8002. Optionally, the electronic device 8000 may also include a transceiver 8004. It should be noted that in practical application, the transceiver 8004 is not limited to one, and a structure of the electronic device 8000 does not constitute a limitation of embodiments of the disclosure.

The processor 8001 may be a CPU (Central Processing Unit), a general-purpose processor, a DSP (Digital Signal Processor), an ASIC (Application Specific Integrated Circuit), a FPGA (Field Programmable Gate Array), or other programmable logic devices, a transistor logic device, a hardware component, or any combination thereof. The processor can implement or execute various exemplary logical blocks, modules, and circuits described in the content of the disclosure. The processor 8001 may also be a combination of computing functions, such as containing a combination of one or more microprocessors, a combination of a DSP and a microprocessor, etc.

The bus 8002 may include a path for transmitting information between the aforementioned components. The bus 8002 may be a PCI (Peripheral Component Interconnect) bus or an EISA (Extended Industry Standard Architecture) bus, etc. the bus 8002 can include an address bus, a data bus, a control bus, etc. For ease of representation, only one thick line is used to represent the bus in FIG 8, but it does not mean that there is only one bus or one type of bus.

The memory 8003 can be a ROM (Read Only Memory) or other types of static storage devices that can store static information and instructions, a RAM (Random Access Memory) or other types of dynamic storage devices that can store information and instructions, or an EEPROM (Electrically Erasable Programmable Read Only Memory) a CD-ROM (Compact Disc Read Only Memory) or other optical disc storages, a optical disc storage (including compressed discs, laser discs, optical discs, digital universal discs, Blu ray discs, etc.), a disk storage media or other magnetic storage devices, or any other media that can be used to carry or store expected program codes in the form of instructions or data structures and can be accessed by computers, but not limited to this.

The memory 8003 is used to store application program codes for executing the solution of disclosure, and is controlled by the processor 8001 for execution. The processor 8001 is used to execute the application code stored in the memory 8003 to implement the the aforementioned method embodiments.

The electronic device includes but is not limited to mobile terminals such as mobile phones, laptops, digital broadcasting receivers, PDAs (personal digital assistants), PADs (tablets), PMPs (portable multimedia players), in-vehicle terminals (such as in-vehicle navigation terminals), and fixed terminals such as digital TVs, desktop computers, and so on. The electronic device shown in FIG 8 is only an example and should not impose any limitations on the functionality and scope of use of the embodiments of the disclosure.

The server provided in the disclosure can be an independent physical server, a server cluster composed of multiple physical servers, or a distributed system. The server can also be a cloud server that provides basic cloud computing services such as cloud services, cloud databases, cloud computing, cloud functions, cloud storage, network services, cloud communication, middleware services, field name services, security services, CDN, as well as big data and artificial intelligence platforms, etc. The terminal can be a smartphone, a tablet, a laptop, a desktop computer, a smart speaker, a smartwatch, etc., but it is not limited to this. Terminals and servers can be directly or indirectly connected through wired or wireless communication methods, and the disclosure is not limited here.

The embodiments of the disclosure provide a computer-readable storage medium having a computer program stored that, when executed by a computer, enables the computer to execute the corresponding the aforementioned method embodiments.

It should be understood that although the various steps in the flowchart of the accompany drawings are displayed sequentially according to the arrows, these steps are not necessarily executed in the order indicated by the arrows. Unless explicitly stated in this specification, the execution of these steps does not have strict order restrictions and can be performed in other orders. Moreover, at least a portion of the steps in the flowchart of the accompany drawings may include multiple sub steps or stages, which may not necessarily be completed at the same time, but may be executed at different time points, and their execution order may not necessarily be sequential, but may in turn or alternate with at least a portion of other steps or sub steps or stages of other steps.

It should be noted that the computer-readable medium described in the disclosure can be a computer-readable signal medium, a computer-readable storage medium, or any combination of the two. The computer-readable storage medium may be, but is not limited to, an electrical, magnetic, optical, electromagnetic, infrared, or semiconductor system, device, or component, or any combination thereof. More specific examples of the computer-readable storage media may include, but are not limited to: electrical connections with one or more wires, portable computer disks, hard drives, random access memory (RAM), read-only memory (ROM), erasable programmable read-only memory (EPROM or flash), optical fibers, portable compact disk read-only memory (CD-ROM), optical storage devices, magnetic storage devices, or any suitable combination of the above. In this disclosure, a computer-readable storage medium may be any tangible medium containing or storing a program, which may be used by an instruction execution system, device, or component, or in combination with it. In this disclosure, the computer-readable signal media may include data signals propagated in the baseband or as part of the carrier wave, which carry computer-readable program codes. This type of transmitted data signal can take various forms, including but not limited to electromagnetic signals, optical signals, or any suitable combination of the above. The computer-readable signal medium can also be any computer-readable medium other than a computer-readable storage medium, which can send, propagate, or transmit programs for use by instruction execution systems, devices, or components, or in combination with them. The program code contained on computer-readable media can be transmitted using any appropriate medium, including but not limited to: wires, optical cables, RF (radio frequency), etc., or any suitable combination of the above.

The above-mentioned computer-readable medium may be included in the electronic device mentioned above. It can also exist separately without being assembled into the electronic device.

The above-mentioned computer-readable medium carries one or more programs that, when executed by the electronic device, cause the electronic device to execute the method shown in the above embodiments.

According to an aspect of the present disclosure, a computer program product or a computer program is provided. The computer program product or the computer program includes computer instructions stored in a computer-readable storage medium. A processor of a computer device reads the computer instructions from the computer-readable storage medium, and the processor executes the computer instructions, causing the computer device to execute the signal processing methods provided in the various optional implementations mentioned above.

The computer program codes for executing the operations of the disclosure may be written in one or more programming languages or combinations thereof, including object-oriented programming languages such as Java, Smalltalk, C++, and conventional procedural programming languages such as "C" or similar programming languages. The program codes can be completely executed on the user computer, partially executed on the user computer, executed as an independent software package, partially executed on the user computer and partially executed on a remote computer, or completely executed on a remote computer or server. In cases involving a remote computer, the remote computer can connect to the user computer through any type of network, including local area networks (LANs) or wide area networks (WANs), or can connect to external computers (such as using internet service providers to connect via the internet).

The flowchart and block diagram in the accompanying drawings illustrate the possible architectures, functionalities, and operations of systems, methods, and computer program products according to various embodiments of the disclosure. At this point, each box in a flowchart or block diagram can represent a module, program segment, or part of codes that contains one or more executable instructions for implementing a specified logical function. It should also be noted that in some alternative implementations, the functions indicated in the box can also occur in a different order than those indicated in the accompanying drawings. For example, two consecutive boxes can actually be executed in parallel basically, and sometimes they can also be executed in an opposite order, depending on the function involved. It should also be noted that each box in the block diagram and/or flowchart, as well as the combination of boxes in the block diagram and/or flowchart, can be implemented using dedicated hardware based a system that performs specified functions or operations, or can be implemented using a combination of dedicated hardware and computer instructions.

The modules described in the embodiment of the disclosure can be implemented through software or hardware. The name of the module does not constitute a limitation on the module itself in some cases, for example, module A can also be described as "module A used to perform operation B ".

The above description is only preferred embodiments of the present disclosure and a description of the technical principles used. Those skilled in the art should understand that the scope of disclosure referred to in this disclosure is not limited to technical solutions formed by specific combinations of the aforementioned technical features, and should also cover other technical solutions formed by arbitrary combinations of the aforementioned technical features or their equivalent features without departing from the disclosed concept. For example, a technical solution formed by replacing the above features with (but not limited to) technical features with similar functions disclosed in this disclosure.

## Claims

1. A signal processing method, performed by an access point device, comprising:
sending a target radio frame, wherein the target radio frame comprises a restricted target wake time (rTWT) element and a quiet element corresponding to the rTWT element.

2. The signal processing method according to claim 1, wherein,
in the target radio frame, a first ranking order of a first quiet element in the quiet element is the same as a second ranking order of a first rTWT element in the rTWT element; the first rTWT element corresponding to the first quiet element;
and/or,
the quiet element comprises a time offset value; wherein a second rTWT element carrying a time offset subfield, the time offset subfield comprising a time offset value of a target quiet element corresponding to the rTWT element.

3. The signal processing method according to claim 1, wherein the rTWT element comprises at least one of first indication information and second indication information;
wherein the first indication information indicates that a service corresponding to the target radio frame comprises a low latency service;
the second indication information indicates that the service corresponding to the target radio frame comprises an uplink service or a downlink service.

4. The signal processing method according to claim 1, wherein the access point device comprises a single-link device or a multi-link device.

5. The signal processing method according to claim 1, wherein, in a case where the access point device comprises a multi-link device, sending the target radio frame comprises:
sending a target radio frame corresponding to each communication link under each communication link with a station;
and/or,
sending radio frame information of each communication link under at least one communication link with the station;
wherein the radio frame information comprises the target radio frame and identification information of each target communication link corresponding to the target radio frame, and the identification information comprises at least one of a link identifier (ID) and a link ID set bitmap.

6. The signal processing method according to claim 1, wherein before sending the target radio frame, the method comprises:
determining the target radio frame.

7. The signal processing method according to any of claims 1 to 6, wherein the target radio frame comprises at least one of a beacon frame, a probe response frame, a multi-link (ML) probe response frame, an association response frame, and a reassociation response frame.

8. A signal processing method, performed by a station, comprising:
receiving a target radio frame, wherein the target radio frame comprises a restricted target wake time (rTWT) element and a quiet element corresponding to the rTWT element.

9. The signal processing method according to claim 8, wherein,
in the target radio frame, a first ranking order of a first quiet element in the quiet element is the same as a second ranking order of a first rTWT element in the rTWT element; the first rTWT element corresponding to the first quiet element;
and/or,
the quiet element comprises a time offset value; wherein a second rTWT element carrying a time offset subfield, and the time offset subfield comprising a time offset value of a target quiet element corresponding to the rTWT element.

10. The signal processing method according to claim 8, wherein the rTWT element comprises at least one of first indication information and second indication information;
wherein the first indication information indicates that a service corresponding to the target radio frame comprises a low latency service;
the second indication information indicates that the service corresponding to the target radio frame comprises an uplink or a downlink service.

11. The signal processing method according to claim 8, wherein the station comprises a single-link device or a multi-link device.

12. The signal processing method according to claim 8, wherein, in a case where the station comprises a multi-link device, receiving the target radio frame comprises:
receiving a target radio frame corresponding to each communication link under each communication link with an access point;
and/or,
receiving radio frame information of each communication link under at least one communication link with the access point;
wherein the radio frame information comprises the target radio frame and identification information of each target communication link corresponding to the target radio frame, and the identification information comprises at least one of a link identifier (ID) and a link ID set bitmap.

13. The signal processing method according to any of claims 8 to 12, wherein the target radio frame comprises at least one of a beacon frame, a probe response frame, a multi-link (ML) probe response frame, an association response frame, and a reassociation response frame.

14. An access point device, comprising:
a sending module, configured to send a target radio frame, wherein the target radio frame comprises a restricted target wake time (rTWT) element and a quiet element corresponding to the rTWT element.

15. A station, comprising:
a receiving module, configured to receive a target radio frame, wherein the target radio frame comprises a restricted target wake time (rTWT) element and a quiet element corresponding to the rTWT element.

16. A signal processing apparatus, applied to an access point device, comprising:
a radio frame sending module, configured to send a target radio frame, wherein the target radio frame comprises a restricted target wake time (rTWT) element and a quiet element corresponding to the rTWT element.

17. A signal processing apparatus, applied to a station, comprising:
a radio frame receiving module, configured to receive a target radio frame, wherein the target radio frame comprises a restricted target wake time (rTWT) element and a quiet element corresponding to the rTWT element.

18. An electronic device, comprising a memory, a processor, and a computer program stored on the memory and executable on the processor, wherein when executing the computer program, the processor performs the method according to any of claims 1 to 13.

19. A computer-readable storage medium having a computer program stored thereon that, when executed by a processor, the method according to any of claims 1 to 13 is performed.
